# EUROPÄISCHE PATENTSCHRIFT

(11) **EP 1 375 956 B1**
(45) Veröffentlichungstag und Bekanntmachung des Hinweises auf die Patenterteilung: **12.04.2006**
(21) Anmeldenummer: 03014632.8
(22) Anmeldetag: 26.06.2003
(51) Int. Cl.: F16F 1/38

(54) **Montageelement zur Schallentkopplung insbesondere bei Hausinstallationen**
Noise absorbing coupling element
Element de montage permettant un couplage slilencieux

(30) Priorität: 26.06.2002 DE 10228474
(43) Veröffentlichungstag der Anmeldung: 02.01.2004
(73) Patentinhaber: WOCO Industrietechnik GmbH, 63628 Bad Soden-Salmünster (DE)
(72) Erfinder: Möller, Ralf, 36381 Schlüchtern (DE); Möller, Stephan, 36399 Freiensteinau (DE); Stey, Manuel, 36148 Kalbach (DE)
(74) Vertreter: Weber-Bruls, Dorothée

(56) Entgegenhaltungen:
- FR-A- 1 251 056
- GB-A- 775 248
- US-A- 6 098 641

## Beschreibung

Die Erfindung betrifft ein Montageelement zur Schallentkopplung gemäß dem Oberbegriff des Patentanspruchs 1.

Bei der Montage von Rohrleitungen an Wänden oder Decken im Bereich von Hausinstallationen kommt der Schallentkopplung der Rohrleitungen von den Wänden oder Decken sowie der Schallisolation des durch diese Bauteile geleiteten Schalls eine immer weiter wachsende Bedeutung zu. Neben den Rohrleitungen selbst muß in diesem Zusammenhang auch der Montage von Fittingen und dergleichen an Wand und Decke Rechnung getragen werden.

Bisherige Lösungen weisen in der Regel lediglich eine sehr steife Zwischenlage, beispielsweise aus einem Elastomer, insbesondere einem thermoplastischen Elastomer, auf, oder versuchen durch Einkapselung eines Fittings eine Schallabstrahlung zu reduzieren. Beiden Ausführungen gelingt jedoch keine wirksame Isolation der durch die Rohrleitung und den Fitting geleiteten Schallleistung von der Wand oder Decke.

So ist aus der DE. 199 26 952 C1 der Anmelderin eine Rohrschelle zur ortsfesten Fixierung von Rohrleitungen bekannt. Diese umfaßt eine das zu fixierende Rohr umgreifende Schelle, einen Elastomerkörper sowie ein Befestigungsmittel zur Fixierung der Rohrschelle an einer Wand oder Tragkonstruktion. Durch den Elastomerkörper wird erreicht, daß das Befestigungsmittel und die Schelle unter bestimmungsgemäßen Einsatzbedingungen stets voneinander beabstandet und schwingfähig gegeneinander gehalten sind. Diese Rohrschelle hat sich zur Befestigung von Rohren an einer Wand oder Decke bewährt. Nachteiligerweise benötigt die Rohrschelle der DE 199 26 952 C1 einen großen Bauraum.

Der Einsatz einer derartigen Rohrschelle zur Montage von Fittingen, d.h. von Rohraustrittsbögen, Rohrverbindungen, Armaturen und dergleichen, ist jedoch nicht sinnvoll, da solche Fittinge im Allgemeinen nicht radialsymmetrische Befestigungselemente, insbesondere mit normiert beabstandeten Öffnungen zur Montage an einer Montageschiene, aufweisen. Ferner unterscheiden sich die Strömungsverhältnisse und damit die in einem Fitting erzeugten Vibrationen grundsätzlich von denen in einem geraden Rohrstück.

Weiterhin ist aus der DE 201 01 044 Ul eine Rohrschelle mit Schallentkoppler bekannt. Dieser Schallentkoppler weist einen mit einem Anschlußgewindenippel in Wirkverbindung stehenden Hohlkörper auf. Innerhalb des Hohlkörpers ist ein Elastomer angeordnet, in dem eine Ankerplatte mit einer Anschlußgewindemuffe zur Befestigung der Rohrschelle angeordnet ist. Durch Abstimmung der inneren Form des Hohlkörpers und der Ankerplatte wird eine Drehsicherung der Anschlußgewindemuffe gegenüber dem Anschlußgewindenippel erreicht. Auch dieser Schallentkoppler ist aufgrund der oben angeführten Anforderung bei der Montage von Fittingen nicht geeignet zur Montage derselben.

Ein schalldämpfendes Befestigungselement zur Befestigung von Rohrleitungen, Lüftungskanälen und dergleichen Teile ist ferner aus der DE 29 26 623 C2 bekannt. Das schalldämpfende Befestigungselement umfaßt ein Tragteil, ein Befestigungsteil und einen Dämpfungskörper, wobei das Tragteil im wesentlichen parallel zueinander verlaufende Schenkel aufweist und das Tragteil sowie das Befestigungselement unter Zwischenschaltung des Dämpfungskörpers gegeneinander abgestützt sind. Zudem sind das Tragteil und das Befestigungsteil gegeneinander verschwenkbar. Mittels der Verschwenkbarkeit des Befestigungsteils ist es möglich, daß das Befestigungsteil über verschiedene Adaptionsmittel mit einer Tragkonstruktion verbunden werden kann, indem jeweils ein auf dem Befestigungsteil vorhandenes Adaptionsmittel in Richtung der Tragkonstruktion ausgerichtet werden kann. Jedoch muß jeweils ein passendes Befestigungselement für verschiedene zu tragende Bauteile hergestellt werden, und das Befestigungselement weist eine unzureichende Schallentkopplung zwischen dem zu tragenden Bauteil und der Tragkonstruktion auf.

Der DE 296 04 995 Ul ist eine schalldämmende Befestigungsvorrichtung zur Befestigung von Rohrleitungen oder Lüftungskanälen an Gebäude- und Raumdecken bekannt. Bei dieser Befestigungsvorrichtung wird ein zylindrischer Gummikörper von einer Schelle unter Vorspannung umgriffen, wobei der Gummikörper mittels eines diesen axial durchsetzenden Bolzens mit einem Befestigungsteil verbunden ist. Mittels der Verschwenkbarkeit der Schelle relativ zum Befestigungsteil wird erreicht, daß sich die Befestigungsvorrichtung derart ausrichtet, daß zwei Achsen zur Befestigung der Befestigungsvorrichtung an einem Rohr einerseits und an einer Tragkonstruktion andererseits stets fluchten. Auch diese Befestigungsvorrichtung weist eine unzureichende Schallentkopplung zwischen dem zu tragenden Rohr und der Tragkonstruktion auf. Ferner ist eine Befestigung von Fittings an dieser Befestigungsvorrichtung nicht möglich.

Darüber hinaus ist aus der DE 88 04 884 U1 ein Schalldämmelement zur Lagerung von Heizungsrohren, Luftkanälen, Aggregaten, Maschinen und dergleichen bekannt. Das Schalldämmelement umfaßt ein Unterteil mit einem Hohlraum, wobei in dem Hohlraum ein elastomerer Zwischenkörper angeordnet ist und in dem elastomeren Zwischenkörper ein Fußteil eines Kopfteils des Schalldämmelements gelagert ist. Das Fußteil ist über einen Übergangsbereich, der aus dem Hohlraum hinausragt, mit dem Kopfteil verbunden. Nachteilig bei diesem Schalldämmelement ist jedoch, daß nach einer Befestigung des Unterteils mittels Lageraugen mit Befestigungslöchern eine einfache Ausrichtung des Schalldämmelements relativ zu Befestigungsvorrichtungen des zu tragenden Bauteils nicht möglich ist. Darüber hinaus weist auch dieses Schalldämmelement eine unzureichende Schallentkopplung auf.

Ferner sind aus dem Stand der Technik Montageelemente zur Befestigung von Fittingen bekannt.

So offenbart die DE 44 22 888 A1 eine Isolierummantelung für Rohraustrittsbögen von Wasserleitungen. Diese besteht aus zwei miteinander verbindbaren und entsprechend dem Rohraustrittsbogen gekrümmten Schalenteilen. Die beiden Schalenteile sind aus einem äußeren harten Kunststoff sowie einer weichen Auskleidung aus Kunststoff, Gummi oder dergleichen gebildet. Ferner weist eines der Schalenteile einen Wandflansch zur Befestigung der Isolierummantelung an einer wandseitigen Montageschiene oder einer Wand auf. Nachteilig bei dieser Isolierummantelung ist jedoch, daß eine derartige schallisolierende Auskleidung nicht zu einer ausreichenden Schallentkopplung des Rohraustrittsbogens von einer Wand führt.

Aus der DE 201 17 750 U1 ist ferner ein Montageblock zur paarweisen Installation von Normanschlußelementen für Sänitär-, Heizungs- oder Lüftungsarmaturen an Leichtbauwänden bekannt. Es ist vorgesehen, daß zwischen dem Anschlußelement und dem Montageblock eine elastische Auskleidung angeordnet ist. Diese Auskleidung liefert jedoch ebenfalls keine ausreichende Schallentkopplung zwischen dem Anschlußelement und dem Montageblock bzw. der Wand, mit welcher der Montageblock verbunden ist.

Neben einer eben beschriebenen Einkapselung eines Fittings ist es aus dem Stand der Technik, wie bereits erwähnt, desweiteren bekannt, ein Fitting unter Zwischenschaltung einer Zwischenlage aus einem Elastomer an einer Wand zu befestigen.

So offenbart die DE 299 18 844 Ul einen Schallentkoppler für Armaturen, der einen Dämmkörper zur Halterung der Armaturen umfaßt. Dieser Dämmkörper ist derart mehrschichtig ausgebildet, daß parallel hintereinander angeordnete Dämmschichten durch mindestens eine eingefügte Zwischenplatte getrennt sind. Die Zwischenplatte ermöglicht es, über selbstbohrende Schrauben eine Armatur an dem Dämmkörper zu befestigen. Nachteilig bei diesem Schallentkoppler ist jedoch, daß dieser nur eine unzureichende Entkopplung der Armatur von einer Wand bewirkt. Es ist nämlich nicht sichergestellt, daß bei beliebigen Befestigungsstärken der Armatur an dem Dämmkörper mittels der Schrauben die Armatur stets so gelagert ist, daß der Dämmkörper nicht als akustische Brücke wirkt.

Ferner ist aus der DE 43 24 754 A1 ein gattungsgemäßes schalldämpfendes Montageelement für die Installation von Sanitär-, Heizungs- und Lüftungsarmaturen bekannt. Dieses Montageelement weist eine Befestigungsplatte, einen Armaturenhalter und eine zwischen der Befestigungsplatte und dem Armaturenhalter angeordnete, schallabsorbierende Dämpfungsschicht auf. Durch diese Dämpfungsschicht sind die Befestigungsplatte und der Armaturenhalter unlösbar miteinander verbunden. Nachteilig bei diesem Montageelement ist jedoch, daß keine ausreichende Entkopplung der Armatur von der Montageschiene bzw. Wand geliefert wird. Insbesondere liegt eine unzureichende Entkopplung von Schwingungen in Normalrichtung der Wand bzw. Montageschiene vor. Ferner muß der Armaturenhalter zur Anpassung an unterschiedlich normierte Befestigungsvorrichtungen bzw. an unterschiedliche Einbaulagen der Armatur aufwendig gestaltet sein, insbesondere eine Vielzahl von Befestigungsöffnungen aufweisen.

Auch sind aus dem Stand der Technik Montageelemente zur Befestigung von Machinenteilen bekannt, wobei diese Montageelemente zur Entkopplung von Schwingungen der Maschinenteile, die insbesondere außerhalb des akustischen Spektrums liegen, dienen.

So offenbart die US 6,098,641 eine Motorantriebseinrichtung für ein Halbleiter-Waver-Verarbeitungssystem. Die Anordnung umfasst ein Erschütterungsabsorptionsglied, das zwischen einem elektrisch angetriebenen Motor und einem Rahmen der Anordnung angeordnet ist. Das Erschütterungsabsorptionsglied ist so ausgebildet, dass es sich elastisch in im wesentlichen allen Richtungen senkrecht zu einer Rotationsachse eines Motorschafts des Motors und in einen geringeren Umfang in Richtungen parallel zu der Rotationsachse des Motorschaftes in Reaktion auf Vibrationskräfte, die Komponenten parallel zu der Rotationsachse des Motors aufweisen, deformiert. Das Erschütterungsabsorptionsglied ist jedoch nicht zur Befestigung von Fittingen bzw. Rohrverbindungen bei einer flächigen Montage des Absorptionsgliedes an einer Wand oder Decke geeignet, da eine Schallentkopplung für Schwingungen in einer Normalenrichtung der Wand nicht möglich ist.

Die GB 775,248 offenbart eine Geräusch- und Erschütterungsabsorptionsbefestigung für Maschinen oder dergleichen. Bei dieser Befestigung wird ein elastischer Körper von einer Hülse durchsetzt, die einen unteren und einen oberen Flansch aufweist. Der elastische Körper ist an einem dieser Flansche befestigt. Innerhalb des elastischen Körpers ist ein Hohlraum ausgebildet, wodurch der elastische Körper zumindest bereichsweise von der Hülse beabstandet ist. Darüber hinaus weist der elastische Körper eine Nut auf, mittels der er an einem Rand einer Befestigungsplatte, insbesondere mittels Verkleben, befestigt ist. Diese Befestigungsvorrichtung ist aufgrund ihrer Bauhöhe nicht zur flächigen Montage von Fittingen bzw. Rohrverbindungen an einer Wand geeignet.

Schließlich offenbart die FR 1 251 056 einen elastischen Träger. Dieser Träger umfasst ebenfalls eine Hülse, die von einem elastischen Körper umgeben ist, der an einem Maschinenteil, insbesondere einem Gestell der Maschine, befestigt ist. Bei einer Verwendung des Trägers wird der elastische Körper komprimiert, wobei insbesondere eine Haftung des elastischen Körpers an der Hülse als auch an dem Gestell erreicht wird. Das Gestell ist ferner so ausgebildet, dass durch die Ausbildung einer Anschlagfläche die radiale Ausdehnung des elastischen Körpers begrenzt wird. Auch dieser Träger ist aufgrund seiner Bauhöhe nicht zum Einsatz als ein Montageelement für ein Rohrfitting bzw. eine Rohrverbindung an einer Wand geeignet.

Aufgabe der vorliegenden Erfindung ist es daher, das gattungsgemäße Montageelement derart weiterzuentwickeln, daß die Nachteile des Stands der Technik überwunden werden, insbesondere eine ausreichende Schallentkopplung zwischen einem Fitting und einer Wand, Decke oder Tragekonstruktion erreicht wird. Dabei soll das Montageelement einfach an vorhandene Befestigungsvorrichtungen bzw. Einbaulagen eines Fittings, auch während eines Montagevorgangs des Fittings, anpassbar sein.

Diese Aufgabe wird erfindungsgemäß durch die kennzeichnenden Merkmale des Patentanspruchs 1 gelöst

Die Unteransprüche 2 bis 17 beschreiben vorteilhafte Ausführungsformen der Erfindung.

Der Erfindung liegt somit die überraschende Erkenntnis zugrunde, daß ein Montageelement derart ausgeführt werden kann, daß eine Schallentkopplung und Schallisolation bei gleichzeitiger einfacher sowie sicherer Montage eines Fittings über das Montageelement beispielsweise an einer Wand möglich ist, während der Fitting frei schwingfähig in allen Richtungen bleibt, indem das Montageelement modulartig einen Montageflansch, ein Dämpfungselement und eine Haltevorrichtung umfaßt, wobei die Haltevorrichtung relativ zum Montageflansch frei schwingfähig und drehbar gelagert ist. Es liegt somit erfindungsgemäß ein simpler, im Wesentlichen flacher Aufbau vor, der in seiner einfachsten Ausführungsform eine Kreisscheibe zum Anbringen eines Fittings in Form der Haltevorrichtung, ein dazu konzentrisch angeordnetes, ringförmiges, elastisches Dämpfungselement und einen hierzu konzentrisch angeordneten ringförmigen Montageflansch zur Befestigung an einer Wand oder Decke aufweist. Das elastische Dämpfungselement weist eine im Wesentlichen konstante Steifigkeit auf, um so eine freie Schwingfähigkeit zur Schallentkopplung sowie Schallisolation gewährleisten zu können. Eine freie Drehbarkeit in Montagerichtung, also parallel zu einer Mittelsenkrechten des Montageflansches, vereinfacht den Aufbau erheblich.

Bei bevorzugten Ausführungsformen der Erfindung sind montagebedingte Spannungen des Montagelements, die die Funktionsfähigkeit in Bezug auf die Schallentkopplung bzw. Schallisolierung einschränken oder gar aufheben könnten, konstruktiv ausgeschlossen, so daß eine Körperschallbrücke zwischen dem Fitting und der Wand sicher ausgeschlossen wird. Darüber hinaus ermöglicht es der modulare Aufbau und die freie Lagerung der Haltevorrichtung im Bezug auf den Montageflansch, daß das Montageelement an verschiedene Fittings anpaßbar ist. Insbesondere ist eine Anpassung an die am Fitting vorhandenen Befestigungsvorrichtungen sowie die Ausrichtung des Fittings zu jedem Zeitpunkt der Montage möglich.

Weitere Merkmale und Vorteile der Erfindung ergeben sich aus der nachstehenden Beschreibung, in der bevorzugte Ausführungsformen der Erfindung beispielhaft anhand schematischer Zeichnungen im Einzelnen erläutert sind. Dabei zeigt:
- Figur 1: eine Aufsicht auf eine erste Ausführungsform des erfindungsgemäßen Montageelements;
- Figur 2: eine perspektivische Ansicht des Dämpfungselements des Montageelements der Figur 1;
- Figur 3: eine perspektivische Ansicht der Haltevorrichtung des Montagelements der Figur 1; und
- Figur 4: eine perspektivische Aufsicht auf eine zweite Ausführungsform des erfindungsgemäßen Montageelements mit einem Dämpfungselement in Teilschnittansicht.

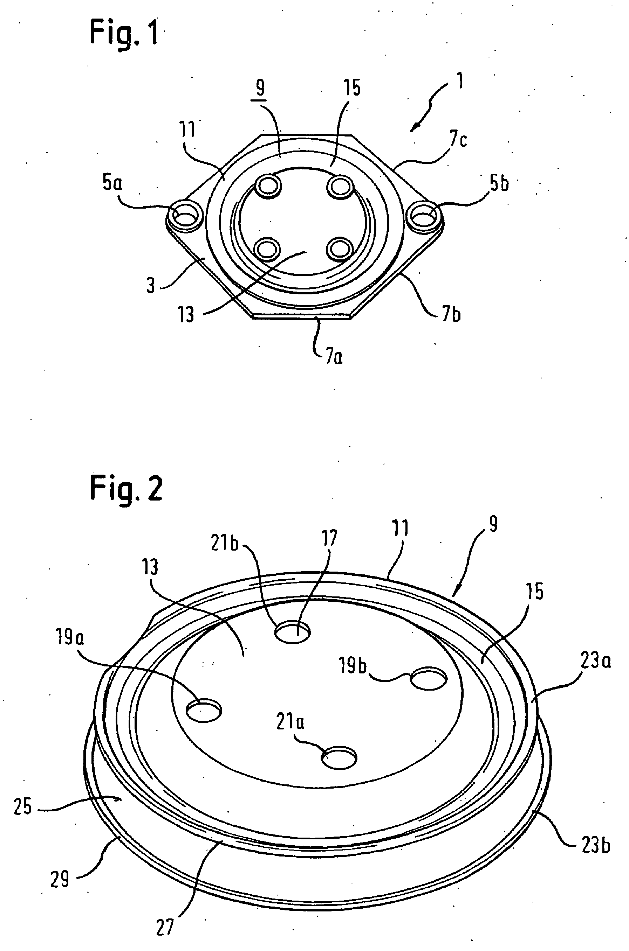

In Figur 1 ist eine Aufsicht auf eine erste Ausfiihrungsform eines erfindungsgemäßen Montageelements 1 dargestellt. Sichtbar ist die Seite des Montageelements 1, die bei einer Montage desselben einer nicht dargestellten Wand, Decke und/oder Montageschiene zugewandt ist. Das Montageelement 1 umfaßt einen Montageflansch 3. Der Montageflansch 3 weist Befestigungsvorrichtungen in Form von Bohrungen 5a, 5b auf. Die Bohrungen 5a, 5b ermöglichen es, das Montageelement 1 mittels des Montageflanschs 3 an der Wand oder Decke, insbesondere mittels der Montageschiene, zu befestigen. Der Umfang des Montageflanschs 3 ist derart ausgeformt, daß Ausrichtungsbereiche 7a, 7b, 7c gebildet werden. Diese sind derart gestaltet, daß bei Montage mehrerer Montageelemente 1 nebeneinander, die Ausrichtungsbereiche 7a, 7b, 7c der Montageelemente 1 so in Kontakt zueinander stehen, daß beispielsweise mittels der Montageelemente 1 befestigte Fittinge einen normierten Abstand zueinander aufweisen. Dies ist insbesondere erwünscht, wenn zwei Fittinge zur Verbindung von Rohrleitungen mit einem Kalt- bzw. Warmwasseranschluß einer Mischarmatur an einer Wand zu befestigen sind. Das Montageelement 1 umfaßt ferner ein Dämpfungselement 9. Das Dämpfungselement 9 weist einen Randbereich 11 sowie einen Mittelbereich 13 auf. Das Dämpfungselement 9 ist derart ausgebildet, daß es vollständig eine im Mittelbereich 13 angeordnete Haltevorrichtung umgibt. Die Haltevorrichtung besteht aus einem harten Kunststoff, insbesondere PA66, während das Dämpfungselement 9 aus einem geeigneten Elastomer besteht. Der Mittelbereich 13 des Dämpfungselements 9 ist mit dem Randbereich 11 über einen Schwingbereich 15 verbunden.

In Figur 2 ist eine perspektivische Ansicht des Dämpfungselements 9 von der Seite, die einem zu montierenden Fitting zugewandt ist, dargestellt. Die Bezugszeichen der Figur 2 entsprechen denjenigen der Figur 1. Wie bereits zuvor dargelegt, umschließt das Dämpfungselement 9 nahezu vollständig eine Haltevorrichtung 17, mit Ausnahme von Befestigungsvorrichtungen der Haltevorrichtung 17 in Form von Bohrungen 19a, 19b bzw. 21a und 21b. Mittels dieser Bohrungen 19a, 19b, 21 a, 21b kann ein Fitting fest mit der Haltevorrichtung 17 verbunden werden. Zur Anpassung an unterschiedliche Fittinge sind die Bohrungen 19a, 19b und 21a, 21b paarweise derart angeordnet, daß sie jeweils normierte Abstände zueinander aufweisen. Selbstverständlich kann vorgesehen sein, daß die Haltevorrichtung 17 mehr als die in Figur 2 dargestellten zwei Bohrungspaare 19a, 19b, bzw. 21 a, 21 b aufweist.

Wie Figur 2 ferner zu entnehmen ist, weist das Dämpfungselement 9 im Randbereich 11 Lippen 23a, 23b auf, und die Umfangsfläche 25 des Dämpfungselements 9 ist konisch geneigt zur Normalen-Richtung des Dämpfungselements 9. Diese Ausgestaltung des Randbereichs 11 ermöglicht es, daß das Dämpfungselement 9 mit dem Montageflansch 3 verbunden werden kann. Zu diesem Zweck weist der Montageflansch 3 im Zentralbereich eine kreisrunde Öffnung auf, die eine komplementär zur Umfangsfläche 25 des Dämpfungselements 9 ausgestaltete Oberfläche aufweist.

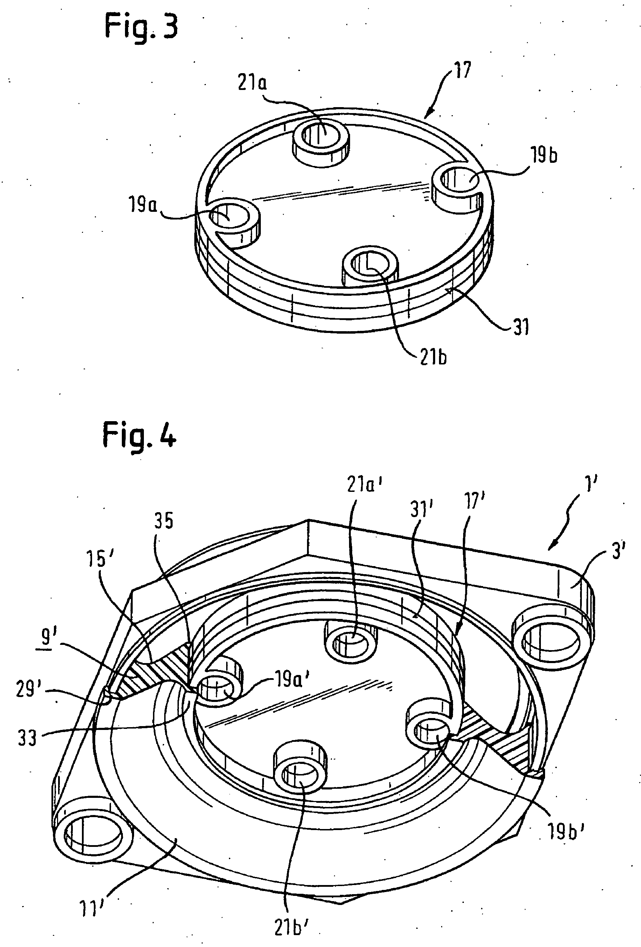

In Figur 3 ist eine perspektivische Ansicht der Haltevorrichtung 17, von der einer Wand bzw. Decke zugewandten Seite aus gesehen, vor der Verbindung mit dem Dämpfungselement 9 dargestellt. Gleiche Elemente tragen identische Bezugszeichen wie in den Figuren 1 und 2. Um eine unlösbare Verbindung zwischen dem Dämpfungselement 9 und der Haltevorrichtung 17 herzustellen, wird das Dämpfungselement 9 auf die Haltevorrichtung 17 aufvulkanisiert. Bei einem Aufvulkanisieren des Dämpfungselements 9 werden die Bohrungen 19a bis 21b von der Elastomermasse des Dämpfungselements 9 nicht aufgefüllt und eine feste Verbindung zwischen der dem Montageflansch 3 und der der Wand bzw. Decke zugewandten Oberfläche des Dämpfungselements 9 hergestellt. Es kann auch vorgesehen sein, daß die feste Verbindung zwischen der Haltevorrichtung 17 und dem Dämpfungselement 9 mittels eines Haftvermittlers bzw. durch Verschweißen der beiden Teile erfolgt. In einer nicht dargestellten Ausfübrungsform der Haltevorrichtung 17 kann ferner vorgesehen sein, daß neben den Bohrungen 19a, 19b bzw. 21a, 21b weitere Bohrungen vorgesehen sind. Um eine feste mechanische Verbindung zwischen der Haltevorrichtung 17 und dem Dämpfungselement 9 herzustellen, weist das Dämpfungselement 17 an der Umfangsfläche 31 eine nicht dargestellte unebene Struktur auf.

Somit ist das Montageelement 1 modular aufgebaut, so daß ein Benutzer bei der Montage eines Fittings verschiedene Dämpfungselemente 9 mit unterschiedlichen Montageflanschen 3 kombinieren kann. Insbesondere zur Anpassung des Schwingungsverhaltens des Montageelements an den zu montierende Fitting können verschiedene Dämpfungselemente bzw. damit in Verbindung stehende Haltevorrichtungen vorgesehen sein. Diese können dann mit unterschiedlichen Montageflanschen kombiniert werden.

Während der Montage eines Fittings ist vorgesehen, daß ein Benutzer das ausgewählte Dämpfungselement 9 von der einer Wand bzw. Decke zuzuwendenden Seite des Montageflansches 3 in diesen einführt. Der Benutzer drückt dabei das Dämpfungselement 9 soweit in den Montageflansch 3 ein, daß das Dämpfungselement 9 mittels der Lippen 27 und 29 im Randbereich 11 des Dämpfungselements 9 mit dem Montageflansch 3 verbunden wird. Die Befestigung des Dämpfungselements 9 innerhalb des Montageflansches 3 in dieser Art ermöglicht es, daß das Dämpfungselement 9 im wesentlichen frei drehbar innerhalb des Montageflansches 3 gelagert ist, nämlich um eine Achse in der Montagerichtung, also um eine zur Mittelsenkrechten des Montageflansches 3 parallele Achse. Somit ist die fest mit dem Dämpfungselement 9 verbundene Haltevorrichtung 17 auch während der Montage des Montageelements 1 frei relativ zum Montageflansch 3 drehbar. Dies ermöglicht es, daß die Bohrungen 19a, 19b bzw. 21a, 21 b in einer gewünschten Position ausgerichtet und ein Fitting mit der Haltevorrichtung 17 in einer beliebigen Ausrichtung relativ zum Montageflansch 3 bzw. einer Wand bzw. Decke montiert werden kann. Die konische Form der Umfangsfläche 25 bzw. der Innenfläche der Öffnung im Montageflansch 3 stellt sicher, daß das Dämpfungselement 9, und damit die Haltevorrichtung 17, nicht durch den Montageflansch 3 um diese Drehachse hindurch gedrückt werden kann und ferner verhindert wird, daß nach erfolgter Montage des Montageelements 1 an einer Wand bzw. Decke sich das Dämpfungselement 9 von dem Montageflansch 3 lösen kann.

Zur Lagerung des Dämpfungselements 9 innerhalb des Montageflansches 3 kann ferner vorgesehen sein, daß die Umfangsfläche 25 des Dämpfungselementes 9 und die Innenfläche der Öffnung im Montageflansch 3 weitere zueinander komplementäre Oberflächenelemente, insbesondere in Form zumindest einer umlaufenden Nut-Federkonfiguration, aufweisen. Dies würde zusätzlich ein Lösen des Dämpfungselements 9 vom Montageflansch 3 erschweren und ferner eine bessere Führung des Dämpfungselements. 9 innnerhalb des Montageflansches 3 bei einer Drehung des Dämpfungselements 9 innerhalb des Montageflanschs 3 bewirken.

In Figur 4 ist eine zweite Ausführungsform eines erfindungsgemäßen Montageelements 1' dargestellt. Diese unterscheidet sich im wesentlichen von der in den Figuren 1 bis 3 dargestellten ersten Ausführungsform dadurch, daß ein im wesentlichen ringförmiges Dämpfungselement 9' verwendet wird. Diese weist im Gegensatz zum Dämpfungselement 9 von Figur 2 keinen Mittelbereich auf, so daß die Haltevorrichtung 17' mit Bohrungen 19a', 19b' bzw. 21 a', 21b' zur Befestigung eines Fittings nur am Umfangsrand mittels Lippen 33 bzw. 35 an das Dämpfungselement 9' angreift. Im Gegensatz zu der ersten Ausführungsform ist beim Montageelement 1' der Figur 4 ferner ein Montageflansch 3' fest mit dem Dämpfungselement 9' mittels Verschweißen des Dämpfungselements 9' mit dem Montageflansch 3' verbunden. Dagegen ist die Verbindung der Haltevorrichtung 17' mit dem Dämpfungselement 9' nicht haftend, so daß die Haltevorrichtung 17' im wesentlichen frei drehbar relativ zum Dämpfungselement 9' bzw. zum Montageflansch 3' gelagert ist. Eine umlaufende, nicht dargestellte Strukturierung auf der ansonsten glatten Umfangsfläche 31' der Haltevorrichtung 17' führt in der zweiten Ausführungsform bei einer Drehung der Haltevorrichtung 17' zu einer guten Führung der Haltevorrichtung 17' innerhalb des Dämpfungselements 9'. Wie Figur 4 ferner zu entnehmen ist, ist das Dämpfungselement 9' derart ausgeformt, daß die Ebene der Haltevorrichtung 17' außerhalb der Ebene des Montageflansches 3' liegt. Mit anderen Worten ist also die Haltevorrichtung 17' von der Decke bzw. Wand, an welcher der Montageflansch 3' befestigt ist, beabstandet. Kommt es nun innerhalb eines mit der Haltevorrichtung 17' verbundenen Fittings zu Vibrationen, so ist die Haltevorrichtung 17' frei schwingfähig relativ zum Montageflansch 3'.

Die Schwingbereiche 15, 15' der Dämpfungselemente 9, 9' sind jeweils verjüngt relativ zu den Randbereichen 11, 11' der Dämpfungselemente 9, 9' ausgeformt, so daß die Haltevorrichtungen l7, 17' sowohl in Richtung der Normalen einer Wand bzw. Decke, an der das Montageelement 1 bzw. 1' befestigt ist, als auch senkrecht zu dieser Richtung schwingen kann. Ferner ermöglicht es die freie Drehbarkeit der Haltevorrichtungen 17 bzw. 17' relativ zum Montageflansch 3, 3', daß die Induzierung von Verspannungen, beispielsweise aufgrund von Wärmeausdehnungen eines Fittings bzw. eines mit dem Fitting verbundenen Rohrs in das Montageelement 1 bzw. 1' reduziert bzw. vollständig vermieden wird.

Die Verwendung eines erfindungsgemäßen Montageelements führt zu einer deutlichen Reduzierung des Schalldruckpegels aufgrund einer nahezu vollständigen Entkopplung eines Fittings von der Wand bzw. Decke an diese angebracht ist, da das erfindungsgemäße Montageelement nicht als Körperschallbrücke dient.

## Patentansprüche

1. Montageelement (1, 1') zur schallentkoppelnden Befestigung von Fittingen, Rohraustrittsbögen, Rohrverbindungen und/oder Armaturen an einer Wand, Decke, Tragkonstruktion und/oder Montageschiene, insbesondere für Hausinstallationen, umfassend einen Montageflansch (3, 3') mit zumindest einer ersten Befestigungsvorrichtung (5a, 5b) und eine über ein elastisches Dämpfungselement (9, 9') mit dem Montageflansch (3, 3') verbindbare, im wesentlichen plattenförmig ausgebildete Haltevorrichtung (17, 17') mit zumindest einer zweiten Befestigungsvorrichtung (19a, 19a', 19b, 19b', 21 a, 21 a', 21 b 21 b'), wobei die Haltevorrichtung (17, 17') relativ zum Montageflansch (3, 3') in alle drei Raumrichtungen im wesentlichen frei schwingfähig ist,
**dadurch gekennzeichnet, daß**
die Haltevorrichtung (17, 17') einen im wesentlichen kreisförmigen Umfang aufweist und für eine nicht haftende Verbindung in einer im wesentlichen kreisförmigen Ausnehmung des Dämpfungselements (9') derart einsetzbar ist und/oder das Dämpfungselement (9) einen im wesentlichen kreisförmigen Umfang aufweist und für eine nicht haftende Verbindung in einer im wesentlichen kreisförmigen Ausnehmung des Montageflansch (3) derart einsetzbar ist, daß die Haltevorrichtung (17, 17') relativ zum Montageflansch (3, 3') im wesentlichen frei um eine zur Mittelsenkrechten des Montageflansches im wesentlichen parallelen Achse drehbar gelagert ist.

2. Montageelement nach Anspruch 1, **dadurch gekennzeichnet, daß**
das Dämpfungselement (9, 9') unlösbar mit dem Montageflansch (3') oder der Haltevorrichtung (17), vorzugsweise mittels Aufvulkanisieren des Dämpfungselements (9, 9'), mittels zumindest eines Haftvermittlers und/oder mittels Verschweißen des Dämpfungselements (9, 9') mit dem Montageflansch (3') oder der Haltevorrichtung (17), verbunden ist, und
das Dämpfungselement (9, 9') nicht, insbesondere nicht haftend, mit der Haltevorrichtung (17') bzw. dem Montageflansch (3) verbunden ist.

3. Montageelement nach Anspruch 2, **dadurch gekennzeichnet, daß**
die Haltevorrichtung (17) zur unlösbaren Verbindung mit dem Dämpfungselement (9) im wesentlichen vollständig vom Dämpfungselement (9) umschlossen ist.

4. Montageelement nach Anspruch 2 oder 3, **dadurch gekennzeichnet, daß**
die Haltevorrichtung (17) oder der Montageflansch (3') zumindest eine, vorzugsweise durchgehende, Öffnung aufweist, die zumindest teilweise vom Dämpfungselement (9, 9') ausgefüllt ist.

5. Montageelement nach einem der vorangehenden Ansprüchen, **gekennzeichnet durch** eine Oberflächenstrukturierung zumindest bereichsweise im Kontaktbereich zwischen dem Dämpfungselement (9, 9') und dem Montageflansch (3, 3') oder der Haltevorrichtung (17, 17').

6. Montageelement nach Anspruch 5, **dadurch gekennzeichnet, daß**
die Innenfläche der Öffnung und die Außenfläche (25) des Umfangs konisch geneigt sind, zumindest eine Nut bzw. einen Wulst aufweisen und/oder eine umlaufende Struktur aufweisen.

7. Montageelement nach einem der vorangehenden Ansprüche, **dadurch gekennzeichnet, daß**
das Dämpfungselement (9, 9') zumindest eine an eine Oberfläche der Haltevorrichtung (17') oder des Montageflansches (3) angreifende Lippe (27, 29, 29') zur nicht haftenden Verbindung des Dämpfungselements (9, 9') mit der Haltevorrichtung (17') oder dem Montageflansch (3) aufweist.

8. Montageelement nach einem der vorangehenden Ansprüche, **dadurch gekennzeichnet, daß**
die erste und/oder zweite Befestigungsvorrichtung zumindest eine Öffnung (5a, 5b, 19a, 19a', 19b, 19b', 21a, 21a', 21b, 21b'), vorzugsweise umfassend ein Gewinde und/oder zur Aufnahme eines Befestigungsmittels, wie einer Schraube, Niete und/oder dergleichen, Klemmvorrichtung, Steckvorrichtung, Klippvorrichtung, Einhängevorrichtung und/oder dergleichen, umfaßt.

9. Montageelement nach einem der vorangehenden Ansprüche, **dadurch gekennzeichnet, daß**
das Dämpfungselement (9, 9') einen Randbereich (11, 11') und einen Mittelbereich (13) aufweist, wobei der Mittelbereich (13) vorzugsweise über einen, insbesondere zumindest teilweise elastischen, Schwingbereich (15) mit dem Randbereich (11) verbunden ist.

10. Montageelement nach Anspruch 8 oder 9, **dadurch gekennzeichnet, daß**
das Dämpfungselement (9, 9'), insbesondere in dessen Mittelbereich (13), und die Haltevorrichtung (17, 17') zumindest zum Teil zueinander ausrichtbare Öffnungen (19a, 19b, 19a', 19b', 21a, 21b, 21a', 21b') als Bestandteil der zweiten Befestigungsvorrichtung aufweisen.

11. Montageelement nach einem der Ansprüche 8 bis 10, **dadurch gekennzeichnet, daß**
die erste und/oder zweite Befestigungsvorrichtung zumindest ein Paar radialsymmetrisch angeordneter Öffnungen (19a, 19b, 19a', 19b', 21a, 21b, 21 a', 21b'), vorzugsweise eine Vielzahl von radialsysmmetrisch angeordneten Öffnungspaaren (19a, 19b, 19a', 19b', 21a, 21 b, 21 a', 21 b'), aufweist, wobei vorzugsweise die Öffnungen zumindest zweier Paare unterschiedliche, vorzugsweise normierte, Abstände zueinander ausweisen und/oder zumindest zwei Öffnungen unterschiedliche, vorzugsweise normierte, Öffnungsquerschnitte aufweisen.

12. Montageelement nach einem der Ansprüche 9 bis 11, **dadurch gekennzeichnet, daß**
der Mittelbereich (13) aus einer Vielzahl von Mittelbereichen in Abhängigkeit von der Bemaßung und/oder Anordnung der Öffnungen der zweiten Befestigungsvorrichtung auswählbar ist, und/oder die Haltevorrichtung (17, 17') aus einer Vielzahl von Haltevorrichtungen in Abhängigkeit von der Bemaßung und/oder Anordnung der Öffnungen der zweiten Befestigungsvorrichtung auswählbar ist.

13. Montageelement nach einem der vorangehenden Ansprüche, **dadurch gekennzeichnet, daß**
der Umfang des Montageflansches (3) zumindest einen Ausrichtungsbereich (7a, 7b, 7c) aufweist, wobei bei Montage zweier Montageelemente (1) unter gegenseitiger Kontaktierung der jeweiligen Ausrichtungsbereiche (7a, 7b, 7c) die Haltevorrichtungen (17) der Montagelemente (1) normierte Relativpositionen, insbesondere Relativabstände, aufweisen.

14. Montageelement nach einem der vorangehenden Ansprüche, **dadurch gekennzeichnet, daß**
das Dämpfungselement (9, 9') ein Elastomer umfaßt und/oder die Haltevorrichtung (17, 17') und/oder der Montageflansch (3, 3') einen Kunststoff, vorzugsweise PA66, und/oder ein Metall umfaßt bzw. umfassen.

15. Montageelement nach einem der vorangehenden Ansprüche, **dadurch gekennzeichnet, daß**
das Montageelement modulartig zusammensetzbar ist durch Auswahl eines Montageflansches, eines Dämpfungselements und einer Haltevorrichtung jeweils aus einer Vielzahl entsprechender Module.

16. Montageelement nach Anspruch 15, **dadurch gekennzeichnet, daß**
jedes Modul zumindest eine Kennzeichnung zur Erleichterung eines abgestimmten Zusammenbaus aufweist.

## Claims

1. Mounting element (1, 1') for the sound-isolating fastening of fittings, pipe outlet bends, pipe connections and/or accessories to a wall, ceiling, supporting structure and/or mounting rail, in particular for domestic installations, comprising a mounting flange (3, 3') having at least a first fastening device (5a, 5b), and a holding device (17, 17') of substantially plate-shaped design which can be connected to the mounting flange (3, 3') via an elastic damping element (9, 9') and has at least a second fastening device (19a, 19a', 19b, 19b', 21a, 21a', 21b, 21b'), the holding device (17, 17') being substantially able to oscillate freely relative to the mounting flange (3, 3') in all three spatial directions, **characterized in that** the holding device (17, 17') has a substantially circular periphery and, for the purpose of a non-adhesive connection, can be inserted in a substantially circular cutout in the damping element (9') in such a way, and/or the damping element (9) has a substantially circular periphery and, for the purpose of a non-adhesive connection, can be inserted in a substantially circular cutout in the mounting flange (3) in such a way, that the holding device (17, 17') is mounted relative to the mounting flange (3, 3') so as to be able to pivot substantially freely about an axis which is substantially parallel to the central perpendicular of the mounting flange.

2. Mounting element according to Claim 1, **characterized in that** the damping element (9, 9') is connected non-detachably to the mounting flange (3') or to the holding device (17), preferably by means of vulcanizing on the damping element (9, 9'), by means of at least one adhesion promoter and/or by means of welding the damping element (9, 9') to the mounting flange (3') or to the holding device (17), and the damping element (9, 9') is not bonded, in particular not adhesively bonded, to the holding device (17') or to the mounting flange (3).

3. The mounting element according to Claim 2, **characterized in that** the holding device (17) is enclosed substantially completely by the damping element (9) for the purpose of non-detachable connection to the damping element (9).

4. Mounting element according to Claim 2 or 3, **characterized in that** the holding device (17) or the mounting flange (3') has at least one opening, preferably a through opening, which is filled at least partially by the damping element (9, 9').

5. Mounting element according to one of the preceding claims, **characterized by** a surface structuring at least at certain points in the contact region between the damping element (9, 9') and the mounting flange (3, 3') or the holding device (17, 17').

6. Mounting element according to Claim 5, **characterized in that** the inner face of the opening and the outer face (25) of the periphery are conically inclined, have at least one groove or one bead and/or have a peripheral structure.

7. Mounting element according to one of the preceding claims, **characterized in that** the damping element (9, 9') has at least one lip (27, 29, 29') which engages on a surface of the holding device (17') or of the mounting flange (3) and is intended for the non-adhesive connection of the damping element (9, 9') to the holding device (17') or to the mounting flange (3).

8. Mounting element according to one of the preceding claims, **characterized in that** the first and/or second fastening device comprise or comprises at least one opening (5a, 5b, 19a, 19a', 19b, 19b', 21a, 21a' 21b, 21b'), preferably comprising a thread and/or, for the purpose of receiving a fastening means, such as a screw, rivet and/or the like, a clamping device, plug-in device, clip-in device, hook-in device and/or the like.

9. Mounting element according to one of the preceding claims, **characterized in that** the damping element (9, 9') has an edge region (11, 11') and a central region (13), the central region (13) preferably being connected to the edge region (11) via an oscillating region (15), in particular an at least partially elastic oscillating region (15).

10. Mounting element according to Claim 8 or 9, **characterized in that** the damping element (9, 9'), in particular in its central region (13), and the holding device (17, 17') have openings (19a, 19b, 19a', 19b', 21a, 21b, 21a' 21b') which can be aligned at least in part with one another as a constituent part of the second fastening device.

11. Mounting element according to one of Claims 8 to 10, **characterized in that** the first and/or second fastening device have or has at least one pair of openings (19a, 19b, 19a', 19b', 21a, 21b, 21a', 21b') arranged with radial symmetry, preferably a plurality of pairs of openings (19a, 19b, 19a', 19b', 21a, 21b, 21a', 21b') arranged with radial symmetry, the openings of at least two pairs preferably having different, preferably standardized, spacings from one another and/or at least two openings having different, preferably standardized, opening cross sections.

12. Mounting element according to one of Claims 9 to 11, **characterized in that** the central region (13) can be selected from a plurality of central regions as a function of the dimensioning and/or arrangement of the openings of the second fastening device, and/or the holding device (17, 17') can be selected from a plurality of holding devices as a function of the dimensioning and/or arrangement of the openings of the second fastening device.

13. Mounting element according to one of the preceding claims, **characterized in that** the periphery of the mounting flange (3) has at least one alignment region (7a, 7b, 7c) so that, when mounting two mounting elements (1) with mutual contact between the respective alignment regions (7a, 7b, 7c), the holding devices (17) of the mounting elements (1) have standardized relative positions, in particular relative spacings.

14. Mounting element according to one of the preceding claims, **characterized in that** the damping element (9, 9') comprises an elastomer and/or the holding device (17, 17') and/or the mounting flange (3, 3') comprise or comprises a polymer, preferably nylon 66, and/or a metal.

15. Mounting element according to one of the preceding claims, **characterized in that** the mounting element can be assembled in modular fashion by selecting a mounting flange, a damping element and a holding device in each case from a plurality of corresponding modules.

16. Mounting element according to Claim 15, **characterized in that** each module has at least one marking in order to achieve a coordinated assembly more easily.

## Revendications

1. Elément de montage (1, 1') pour la fixation avec désaccouplement phonique de raccords de coudes de sorties tubulaires de liaisons tubulaires et/ou de robinetterie sur une paroi, un plafond, une construction support et/ou un rail de montage, en particulier pour des installations domestiques comprenant une bride de montage (3, 3') avec au moins un premier dispositif de fixation (3a, 5b) et un dispositif de maintien (17, 17') réalisé sensiblement en forme de pplaque, susceptible d'être relié à la bride de montage (3, 3') par l'intermédiaire d'un élément d'amortissement (9, 9') élastique, comprenant au moins un deuxième dispositif de fixation (19a, 19a', 19b, 19b', 21a, 21a', 21b, 21b'), sachant que le dispositif de maintien (17, 17') est susceptible d'osciller, en particulier pratiquement librement, dans la totalité des trois directions de l'espace par rapport à la bride de montage (3, 3'), **caractérisé en ce que** le dispositif de maintien (17, 17') présente une périphérie sensiblement circulaire et est susceptible d'être inséré, pour une liaison non adhérente, dans un évidement sensiblement en forme de cercle de l'élément d'amortissement (9'), et/ou l'élément d'amortissement (9) présente une périphérie sensiblement en forme de cercle et est susceptible d'être inséré, pour une liaison non adhérente, dans un évidement sensiblement en forme de cercle de la bride de montage (3), de manière que le dispositif de maintien (17, 17') puisse se monter de façon à pouvoir tourner pratiquement librement, autour d'un axe sensiblement parallèle à la perpendiculaire centrale de la bride de montage.

2. Elément de montage selon la revendication 1, **caractérisé en ce que** l'élément d'amortissement (9, 9') est relié de façon indésolidarisable à la bride de montage (3) ou au dispositif de maintien (17), de préférence par vulcanisation de l'élément d'amortissement (9, 9'), à l'aide d'au moins un élément conférant de l'adhésion et/ou par soudage de l'élément d'amortissement (9, 9') à la bride de montage (3') ou au dispositif de maintien (17), et
l'élément d'amortissement (9, 9') est relié, en particulier sans adhésion, au dispositif de maintien (17') ou à la bride de montage (3).

3. Elément de montage selon la revendication 2, **caractérisé en ce que** le dispositif de maintien (17) est entouré pratiquement complètement par l'élément d'amortissement (9), pour obtenir une liaison indésolidarisable à l'élément d'amortissement (9).

4. Elément de montage selon la revendication 2 ou 3, **caractérisé en ce que** le dispositif de maintien (17) ou la bride de montage (3') présente au moins une ouverture, de préférence continue, remplie au moins partiellement par l'élément d'amortissement (9, 9').

5. Elément de montage selon l'une des revendications précédentes, **caractérisé par** une structuration de surface, au moins par zones, dans la zone de contact entre l'élément d'amortissement (9, 9') et la bride de montage (3, 3') ou le dispositif de maintien (17, 17').

6. Elément de montage selon la revendication 5, **caractérisé en ce que** la face intérieure de l'ouverture et la face extérieure (25) de la périphérie sont inclinées de façon conique et présentent au moins une rainure ou un bourrelet et/ou présentent une structure de pourtour.

7. Elément de montage selon l'une des revendications précédentes, **caractérisé en ce que** l'élément d'amortissement (9, 9') présente au moins une lèvre (27, 29, 29') agissant sur une surface du dispositif de maintien (17') ou de la bride de montage (3), pour établir une liaison non adhérente de l'élément d'amortissement (9, 9') au dispositif de maintien (17') ou à la bride de montage (3).

8. Elément de montage selon l'une des revendications précédentes, **caractérisé en ce que** le premier et/ou le deuxième dispositif de fixation comprend au moins une ouverture (5a, 5b, 19b, 19a', 19b, 19b', 21a, 21a', 21b, 21b'), de préférence comprenant un filetage et/ou servant à recevoir un moyen de fixation tel qu'une vis, des rivets ou analogue, un dispositif de serrage, un dispositif à enfichage, un dispositif à enclipsage, un dispositif d'accrochage et/ou analogue.

9. Elément de montage selon l'une des revendications précédentes, **caractérisé en ce que** l'élément d'amortissement (9, 9') présente une zone de bordure (11, 11') et une zone centrale (13), la zone centrale (13) étant reliée à la zone de bordure (11), de préférence par l'intermédiaire d'une zone oscillante (15), en particulier au moins partiellement élastique.

10. Elément de montage selon la revendication 8 ou 9, **caractérisé en ce que** l'élément d'amortissement (9, 9'), en particulier dans sa zone centrale (13), et le dispositif de maintien (17, 17') présentent des ouvertures (19a, 19b, 19a', 19b', 21a, 21b, 21a', 21b') pouvant au moins en partie être alignées les unes par rapport aux autres, en tant que constituant du deuxième dispositif de fixation.

11. Elément de montage selon l'une des revendications 8 à 10, **caractérisé en ce que** le premier et/ou le deuxième dispositif de fixation présente(nt) au moins une paire d'ouvertures (19a, 19b, 19a', 19b', 21a, 21b, 21a', 21b') disposées de façon radialement symétrique, de préférence une pluralité de paires d'ouvertures (19a, 19b, 19a', 19b', 21a, 21b, 21a', 21b') disposées de façon radialement symétrique, sachant que, de préférence, les ouvertures d'au moins deux paires présentent des espacements différents, de préférence normalisés, les uns par rapport aux autres, et/ou présentent au moins deux ouvertures ayant des sections transversales d'ouverture différentes, de préférence normalisées.

12. Elément de montage selon l'une des revendications 9 à 11, **caractérisé en ce que** la zone centrale (13) est susceptible d'être sélectionnée par une pluralité de zones centrales, en fonction des dimensions et/ou de l'agencement des ouvertures du deuxième dispositif de fixation, et/ou le dispositif de maintien (17, 17') est susceptible d'être sélectionné à partir d'une pluralité de dispositifs de maintien, en fonction des dimensions et/ou de l'agencement des ouvertures du deuxième dispositif de fixation.

13. Elément de montage selon l'une des revendications précédentes, **caractérisé en ce que** la périphérie de la bride de montage (3) présente au moins une zone d'orientation (7a, 7b, 7c), sachant que, lors du montage de deux éléments de montage (1) avec mise en contact mutuelle des zones d'orientation (7a, 7b, 7c) respectives, les dispositifs de maintien (17) des éléments de montage (1) présentent des positions relatives normalisées, en particulier des espacements relatifs.

14. Elément de montage selon l'une des revendications précédentes, **caractérisé en ce que** l'élément d'amortissement (9, 9') comprend un élastomère et/ou le dispositif de maintien (17, 17') et/ou la bride de montage (3, 3') comprend, respectivement comprennent, une matière synthétique, de préférence du PA66 et/ou un métal.

15. Elément de montage selon l'une des revendications précédentes, **caractérisé en ce que** l'élément de montage peut être assemblé de façon modulaire, par sélection d'une bride de montage d'un élément d'amortissement et d'un dispositif de maintien, chaque fois à partir d'une pluralité de modules correspondants.

16. Elément de montage selon la revendication 15, **caractérisé en ce que** chaque module présente au moins une identification, servant à faciliter un assemblage conforme.
